# EUROPEAN PATENT SPECIFICATION

(11) **EP 0 505 125 B1**
(45) Date of publication and mention of the grant of the patent: **15.05.1996**
(21) Application number: 92302243.8
(22) Date of filing: 16.03.1992
(51) Int. Cl.: E03B 7/07

(54) **Water purifying apparatus**
Wasserreinigungsvorrichtung
Dispositif de purification d'eau

(30) Priority: 16.03.1991 JP 51773/91; 19.02.1992 JP 31743/92
(43) Date of publication of application: 23.09.1992
(73) Proprietor: INAX CORPORATION, Tokoname-Shi, Aichi 479 (JP)
(72) Inventor: Oikawa, Yukio, Handa-shi (JP); Shigeta, Isamu, Toyota-shi (JP); Saito, Shiro, c/o INAX Corporation, Aichi (JP); Hayamizu, Mitsuhiro, c/o INAX Corporation, Aichi (JP)
(74) Representative: Price, Paul Anthony King

(56) References cited:
- CH-A- 663 540
- FR-A- 2 148 846
- US-A- 3 757 814
- US-A- 4 540 489

## Description

The present invention relates to water purifying apparatus and, more particularly, to water purifying apparatus suitable for household use.

Water purifying apparatus having a filter inside a main body for removing from tap water fine inorganic and organic substances, and residual chlorine, has been widely used in general households. Since the main body of the water purifying apparatus is mounted on an ordinary water faucet, the kitchen sink is made smaller. Therefore, to solve this problem, a water purifying apparatus has been proposed in which the main body of the water purifying apparatus is housed below the sink, and the sink top has a water faucet used exclusively for purified water.

However, because the tap water which passes through the filter does not contain residual chlorine, microbes, such as bacteria, are likely to proliferate in the tap water which remains in the section from downstream of the filter of the main body of the water purifying apparatus to the discharge outlet of the water faucet used exclusively for purified water.

FR-A-2148846 discloses a steriliser which may be inserted in a water supply pipe. The steriliser has a pair of electrodes for sterilising the water in the pipe. Extra pairs of electrodes may be provided. Also, a filter may be inserted in the water supply pipe.

According to the present invention, there is provided water purifying apparatus, comprising: a water purifying apparatus main body for purifying water, said water purifying apparatus main body having an inlet arranged to receive water to be purified, filter means in communication with said inlet, an outlet disposed downstream of said filter means, and a first electrode means for passing electric current through water disposed in said filter means; a water faucet for discharging water purified by said water purifying apparatus main body, said water faucet having a water faucet main body disposed downstream of said outlet, a water passage disposed downstream of said faucet main body, and second electrode means for passing electric current through water disposed in said water passage; and power supply means for supplying electric current to said first and second electrode means.

The first and second electrode means prevent microbes from proliferating in the water from which residual chlorine has been removed by the filter.

The invention will now be described by way of non-limiting embodiments with reference to the accompanying drawings, in which:-
Fig. 1A is a front view of a sink unit in which a household water purifying apparatus of the present invention is incorporated;
Fig. 1B is a side view of the sink unit and purifying apparatus shown in Fig. 1A;
Fig. 2 is an enlarged cross-sectional view of a main body of the purifying apparatus shown in Figs. 1A and 1B;
Fig. 3 is a top plan view of the main body of the water purifying apparatus shown in Fig. 2;
Fig. 4 is an enlarged side view of a water faucet of the water purifying apparatus shown in Figs. 1A and 1B;
Fig. 5 is a cross-sectional view of a cartridge of the water purifying apparatus shown in Figs. 1A and 1B;
Fig. 6 is an electrical wiring diagram which illustrates a control circuit wired in a control board of the water purifying apparatus shown in Figs. 1A and 1B;
Fig. 7 is a side view, partly in cross section, which illustrates a second embodiment of the present invention; and
Fig. 8 is a cross-sectional view which illustrates the main portion of a third embodiment of the present invention.

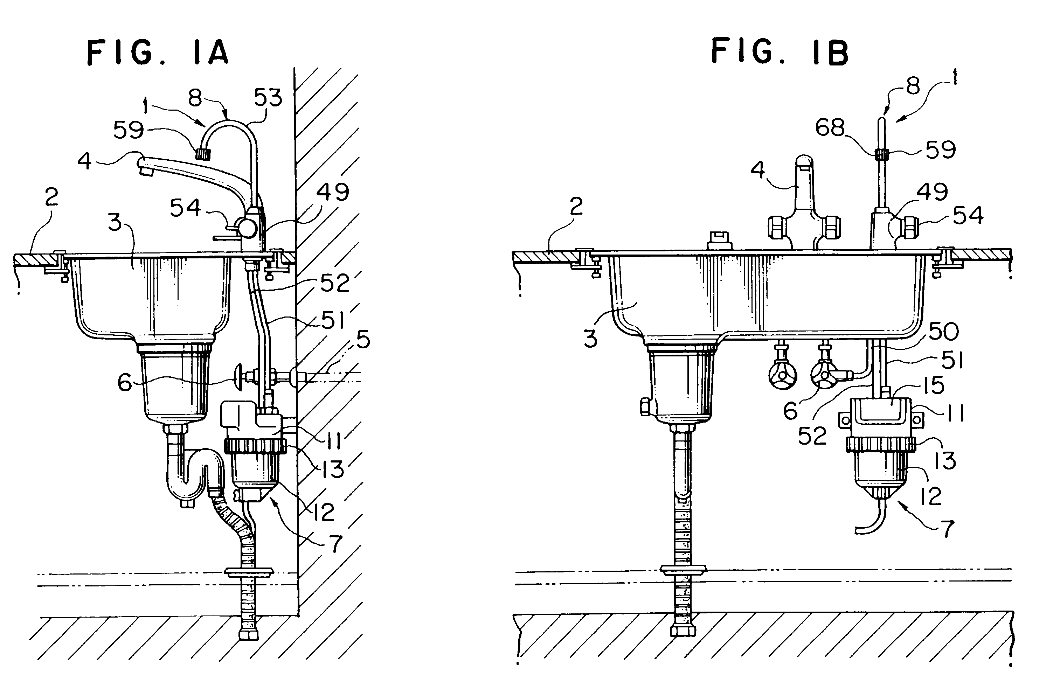

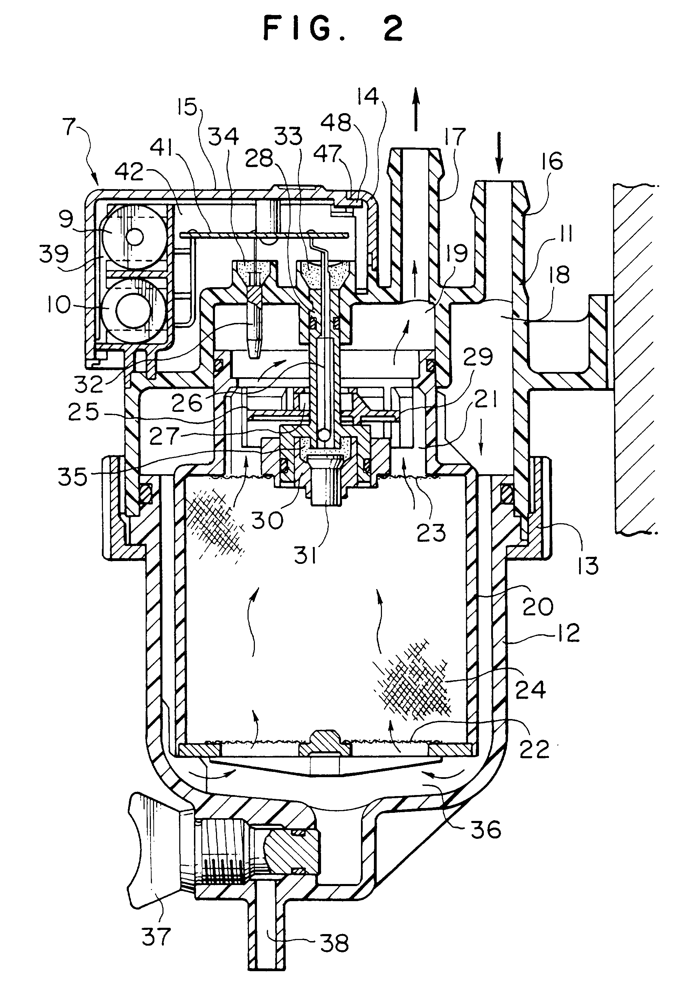

Figs. 1A and 1B show a sink unit in which a household water purifying apparatus is incorporated. A household water purifying apparatus 1 is connected to a branch valve 6 in a feedwater pipe 5 which feeds tap water to a water faucet 4 above a sink 3 provide in a worktop 2. The household water purifying apparatus 1 comprises a water purifying apparatus main body 7 housed below the sink 3 and worktop 2, a water faucet 8 used exclusively for purified water and disposed above the sink 3, and dry battery cells 9 and 10 housed inside the water purifying apparatus main body 7 (see Fig. 2).

The water purifying apparatus main body 7 has a cap 11 fastened to the wall behind the worktop 2 by a bolt or the like, a casing 12 fitted around the inner circumference of the lower end portion of the cap 11, a cylindrical fastening member 13 for connecting the cap 11 and the casing 12, a housing 14 which is fitted to the upper end portion of the cap 11, and a plate 15 which is releasably mounted on the housing 14.

The cap 11 is made of resin, such as polyphenylene sulfide (PPS). The cap 11 is disposed in such a manner that an entry pipe 16 which is connected to the branch valve 6 and an exit pipe 17 which is connected to the interior of the water faucet 8 project upwards. A water passage 18 (into which the tap water flows) and a purified water passage 19 (out of which the purified water flows to the water faucet 8) are formed in the interior of the cap 11. The upper end portion of a cylindrical cartridge 20 is inserted into a wall which defines the purified water passage 19 of the cap 11.

The cartridge 20, made of resin, for example, acrylonitrile-butadiene-styrene copolymer (ABS), has a purified water passage 21 through which tap water flows. The purified water passages 19 and 21 combine to form a single water passage.

Inside the cartridge 20 are a mesh 22 made of chemical fibers provided where the tap water flows in, a mesh 23 made of chemical fibers provided where the tap water flows out, and an area between the meshes 22 and 23 filled with an electrically conductive filter 24.

The filter 24 is formed of an active carbon fiber layer (surface area of 1,000 m/g or above) so as to permit tap water to pass through it. When tap water passes through it, inorganic and organic substances and residual chlorine contained in the tap water are removed. The two meshes 22 and 23 prevent the filter from distorting and being dispersed by the flow of water.

A water-current sensor 25 for detecting whether there is a water current inside the water passage 21 is installed in the top end of the cartridge 20. The water-current sensor 25 comprises a lead switch 26 and a permanent magnet 27. The lead switch 26 is inserted into a cylindrical stay 28 made of resin, e.g. PPS or the like. The upper end portion of the stay 28 is fitted into the cap 11, and the lower end portion thereof is fitted into the cartridge 20. The permanent magnet 27 is embedded in a ring-like float 29 made of, for example, ABS resin. The float 29 is fitted around the stay 28 in such a manner as to be slidable in the axial direction of the stay 28. The outer circumference portion of the float 29 projects into the water passage 21 and the float 29 is moved by the water current.

A bar-shaped positive electrode 31, made of, for example, carbon and held by a holder 30, is fitted into the interior of the tube of the stay 28 in the lower end thereof. The positive electrode 31 is placed in such a manner as to contact the filter 24. A bar-shaped negative electrode 32, made of, for example, aluminum and arranged parallel to the stay 28, is fitted into the upper end portion of the cap 11. The negative electrode 32 is disposed inside the water passage 19 and the water passage 21 of the cartridge 20 and projects from the upper end portion of the cap 11. The positive electrode 31 and the negative electrode 32 constitute a pair of first electrode means.

Gaps between the cap 11 and the stay 28, between the cap 11 and the negative electrode 32 and between the holder 30 and the positive electrode 31 are filled with potting agents 33 to 35 to securely fix the components in place and to prevent leakage of water.

The casing 12 is made of resin, for example, nylon (trade mark), and is cylindrical in shape. A water passage 36 for housing the lower end portion of the cartridge 20 and through which tap water flows is formed inside the casing 12. A drain passage 38 which is opened/closed by a cock 37 is connected to the lower end of the water passage 36.

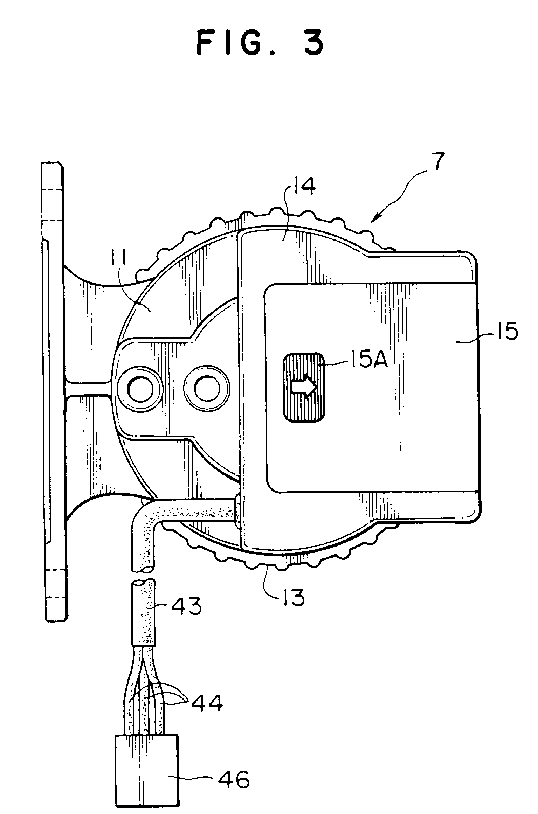

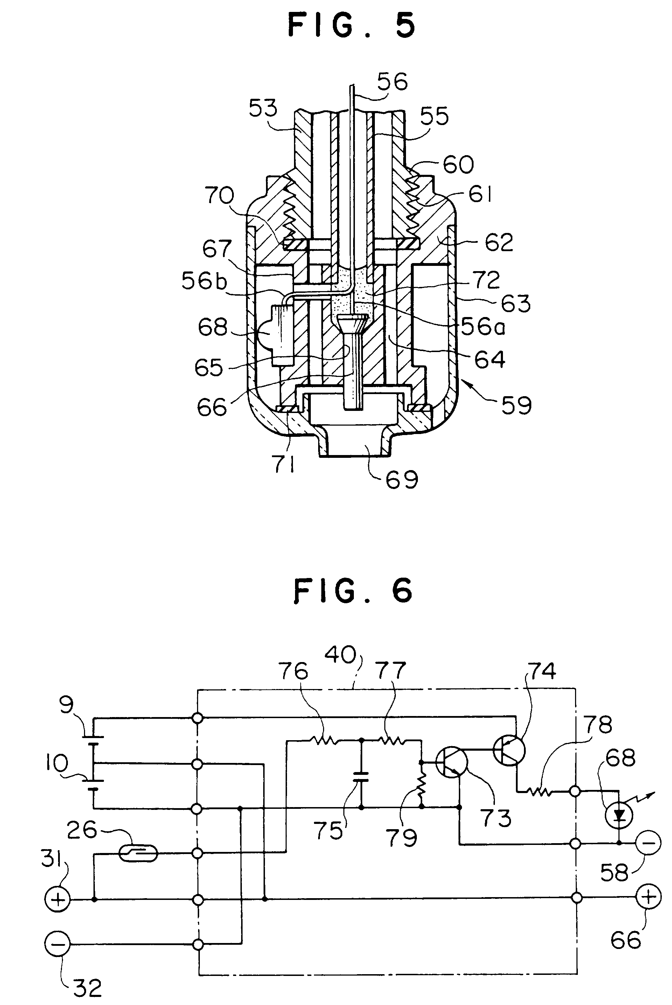

The portion enclosed by the upper end portion of the cap 11, the housing 14 and the plate 15 is used as a housing chamber 39 for housing dry battery cells 9 and 10 and as a control chamber 42 for housing a control board 41 on which a control circuit (see Fig. 6) is wired. A plurality of lead wires 44, which are inserted into a tube 43, as shown in Fig. 3, extend out of the housing 14. A connector 46 is connected to the terminals of the lead wires 44.

When the dry battery cells 9 and 10 are to be replaced, the plate 15 is pushed, as shown in Fig. 3, in the direction of the arrow while a portion 15A of the plate 15 is pressed downwards, and a locking claw 48 of the plate 15 is disengaged from a locking section 47 of the housing 14. Thus, after the housing chamber 39 is opened, the dry battery cells 9 and 10 can be replaced.

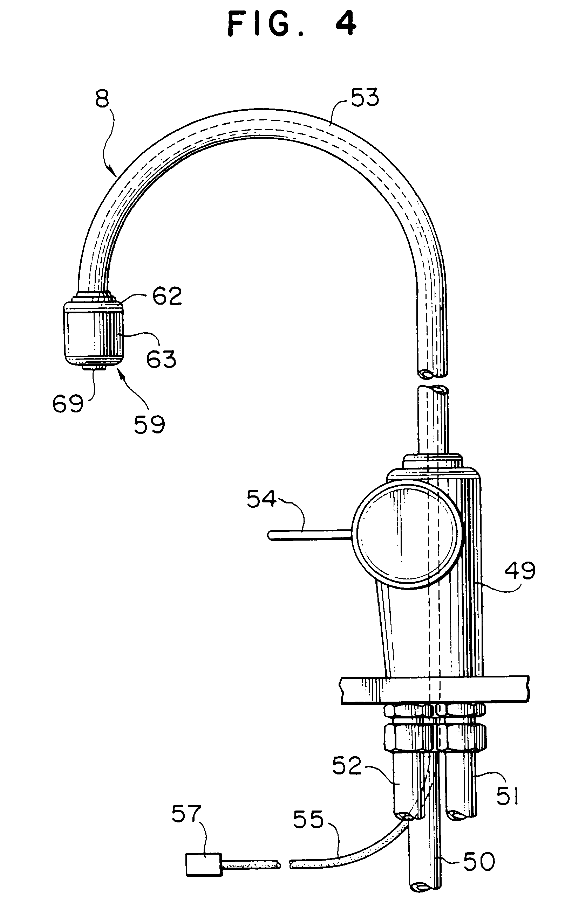

Fig. 4 shows the water faucet 8 used exclusively for purified water.

The water faucet 8 has a water faucet main body 49 fixed to the upper surface of the worktop 2, a plurality of connection pipes 50 to 52 which project downwardly from the water faucet main body 49, and a discharge pipe 53 which projects upwardly from the water faucet main body 49. The discharge pipe 53 forms a feedwater passage.

A main handle 54, which when it is turned adjusts the extent to which the connection pipes 50 to 52 and the discharge pipe 53 are opened, is installed in the water faucet main body 49. When the handle 54 is operated, the tap water flows into the household water purifying apparatus 1. A pair of lead wires 56a and 56b for positive electrodes extend along a tube 55 (as shown in Fig. 5) and out of the lower end portion of the water faucet main body 49. The lead wire 56a is connected to a positive electrode 66 which will be described later, and the lead wire 56b is connected to a light-emitting diode 68 which will be described later. A connector 57, coupled to the connector 46 of the water purifying apparatus main body 7, is connected to the terminal of the lead wires 56.

The connecting pipe 50 is connected to the entry pipe 16 of the water purifying apparatus main body 7 through the main body 49 and the connecting pipe 51, and the connecting pipe 52 is connected to the exit pipe 17 of the water purifying apparatus main body 7 and the discharge pipe 53. The discharge pipe 53 is made of an electrical conductor and bent into the shape of an inverted U. The lead wire 56b for the light-emitting diode 68 is electrically connected in parallel to the discharge pipe 53. As a result, the discharge pipe 53 forms a negative electrode 58 as shown in Fig. 6. The positive electrode 66 and the negative electrode 58 constitute a pair of second electrode means. One end of the discharge pipe 53 is connected to the connecting pipe 52 in the water faucet main body 49, and the other end carries a cartridge 59.

The cartridge 59 shown in Fig. 5 comprises a cylindrical main body 62 made of an electrically insulating resin and having an inner screw thread 61 which engages an outer screw thread 60 formed on the end of the discharge pipe 53, and a transparent resinous cover 63 which is fitted around the main body 62.

A plurality of discharge outlets 64 through which tap water is discharged are formed in the interior of the main body 62. The bar-shaped positive electrode 66 made of, for example, carbon is electrically connected to the lead wire 56a and is fitted in a through hole 65 in the centre of the discharge outlets 64 of the main body 62. The positive electrode 66 projects from the lower end of the main body 62. Furthermore, the light-emitting diode 68 which emits light when a DC voltage higher than a predetermined voltage is supplied via the lead wire 56b is fixed in a circumferential groove 67 formed around the outer surface of the main body 62. The light-emitting diode 68 functions as an indicator of dry-cell service life. The light emitted by the light-emitting diode 68 is visible to a user through the cover 63 because the cover 63 is made of a transparent resin.

The cover 63 has a nozzle 69 for discharging tap water into the sink 3. Seals 70 and 71 for preventing leakage of water are located between the discharge pipe 53 and the main body 62 and between the main body 62 and cover 63, respectively. The gap between the main body 62 and the positive electrode 66 is filled with a potting agent 72 for fixing in place the above components and preventing leakage of water.

Fig. 6 is an electrical wiring diagram which illustrates a control circuit 40 wired on a control board 41.

Dry battery cells 9 and 10 act as voltage supplying means. They apply a DC voltage of 1.5 V between the positive electrode 31 and the negative electrode 32 of the water purifying apparatus main body 7 through the control circuit 40, and apply a DC voltage of 1.5 V between the positive electrode 66 and the negative electrode 58 of the water faucet 8 used exclusively for purified water.

The control circuit 40 comprises, for example, two transistors 73 and 74, a capacitor 75 and four resistors 76 to 79. When the lead switch 26 is closed, the two transistors 73 and 74 are turned on, causing the dry battery cell 9 and the light-emitting diode 68 to conduct. The light-emitting diode 68 is not illuminated if the lead switch 26 closes and the DC voltage of the dry battery cell 9 is below 0.8 V.

The operation of the household water purifying apparatus 1 will now be explained with reference to Figs. 1A to 6.

When a user turns the handle 54 of the water faucet main body 49 of the water faucet 8 used exclusively for purified water, the connecting pipes 50 and 51 are connected together, causing tap water to flow into the water purifying apparatus main body 7 via the water passage 18 of the entry pipe 16 of the cap 11.

The tap water which flows into the water purifying apparatus main body 7 passes through the water passage 36 of the casing 12, as indicated by the arrow shown in Fig. 2, and flows into the purified water passage 21 of the cartridge 20. Since the interior of the cartridge 20 is filled with the filter 24 formed of an active carbon fiber layer, inorganic and organic substances and residual chlorine contained in the tap water are removed.

Then, the purified tap water flows out of the water purifying apparatus main body 7 through the purified water passage 19 of the cap 11. The purified tap water is discharged into the sink 3 from the discharge outlets 64 of the cartridge 59 after passing along the connecting pipe 52, through the water faucet main body 49 and along the discharge pipe 53.

Next, when the user returns the handle 54 of the water faucet main body 49 of the water faucet 8 to its original position, the connecting pipes 50 and 51 are shut off, causing the water flow inside the household water purifying apparatus 1 to be stopped. At this time, the tap water remains in the water purifying apparatus main body 7 and the water faucet 8. The tap water which has passed through the filter 24 has no self-sterilizing ability because residual chlorine has been removed. For this reason, there is a possibility that microbes, such as bacteria, will proliferate in the tap water over a period of a few hours and that the tap water will become quite unsanitary.

Therefore, in the household water purifying apparatus 1, the proliferation of microbes, such as bacteria, in tap water which remains inside the water purifying apparatus main body 7 from downstream of the filter 24 to the purified water passage 19 is suppressed. The positive electrode is in contact with the filter 24 so as to make the entire filter 24 a positive electrode, and a DC voltage of 1.5 V is applied by the dry battery cell 10 between the filter 24 and the negative electrode 32 which projects into the purified water passage 19. Similarly, the proliferation of microbes, such as bacteria, in tap water which remains inside the entire discharge pipe 53 is suppressed. The negative electrode 58 is in contact with the discharge pipe 53 of the water faucet 8 so as to make the entire discharge pipe 53 a negative electrode, and a DC voltage of 1.5 V is applied by the dry battery cell 10 between the positive electrode 66 which projects into the nozzle 69 of the cartridge 59 and the discharge pipe 53.

Because the voltage effective for suppressing the proliferation of microbes, such as bacteria, is at least 0.8 V, if the DC voltage of the dry battery cell 10 falls below 0.8 V, the user must be notified of this fact. Therefore, in the household water purifying apparatus 1, the water-flow sensor 25 is placed inside the water purifying apparatus main body 7, and the light-emitting diode 68 is mounted in the cartridge 59 of the water faucet 8. Thus, the user is informed of the state of the dry battery cell 10.

This will be explained briefly with reference to Figs. 2 and 6. If there is a water current inside the purified water passage 21 of the cartridge 20 of the water purifying apparatus main body 7, the float 29 of the water-flow sensor 25 is pushed up in the direction of the arrow shown in the figure. When the float 29 reaches the uppermost point, the lead switch 26 is closed by the magnetic flux of the permanent magnet 27 contained in the float 29.

The closure of the lead switch 26 causes the positive electrical potential of the dry battery cell 10 to be applied to the base of the transistor 73, so the transistor 73 is turned on. The turning-on of the transistor 73 causes the transistor 74 to be turned on. As a result, the DC voltage of the dry battery cell 9 is applied to the light-emitting diode 68, and the light-emitting diode 68 is illuminated. The light-emitting diode 68 is illuminated when the DC voltage of the dry battery cell 10 is above 0.8 V. It is not illuminated if the water-current sensor 25 detects a water current when the DC voltage of the dry battery cell 10 is below 0.8 V. As a result, the user is notified of the end of the life of the dry battery cell 10.

Although in the above-described embodiment the present invention is used as a household water purifying apparatus, the present invention may be used as a commercial water purifying apparatus. Although in this embodiment the water purifying apparatus is separate from the main water faucet 4, it may be combined therewith.

Although in this embodiment dry battery cells housed in the water purifying apparatus main body are used, commercial AC power supplies and generators may be used instead. The sensing of a water current inside the water purifying apparatus main body may be used to cut off the voltage supplied to the electrodes 31, 32, 58, 66.

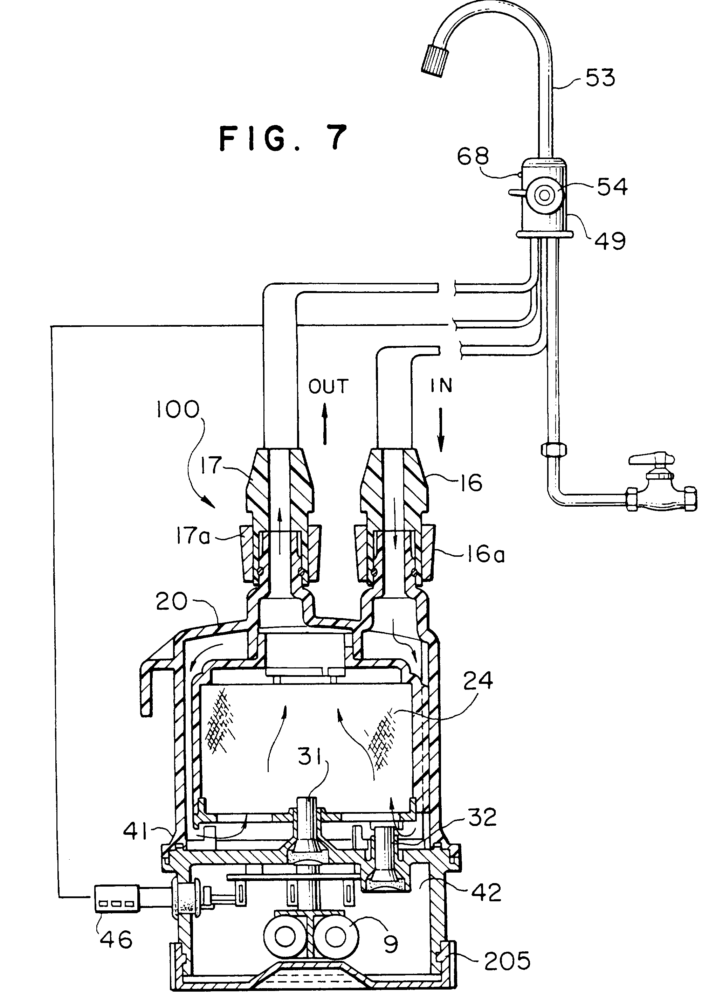

Fig. 7 is a cross-sectional view of a water purifying apparatus 100, which illustrates a second embodiment of the present invention.

In Fig. 7, the same parts as in the first embodiment are given the same reference numerals. In the second embodiment, a mechanical switch (not shown) is disposed inside the water faucet main body 49 instead of the ring-like float 29 (water current sensor) of the first embodiment. With this construction, the entire water purifying apparatus 100 can be miniaturized because the ring-like float 29 is not used.

In the second embodiment, the filter 24 of the water purifying apparatus 100 is easily replaced by replacing the entire casing 12 in which the filter is contained. Quick action connectors 16a and 17a are fitted to the entry pipe 16 and the exit pipe 17.

The water faucet main body 49, the discharge pipe 53 and the like are the same as in the first embodiment.

In addition, in the second embodiment, the entire control chamber 42 is isolated from humidity since the drain passage 38 of the first embodiment is eliminated and the control chamber 42 in which the dry battery cell 9 and the control board 41 and the like are disposed is located at the bottom of the water purifying apparatus 100 and is covered with a water-vapor proof cap 205.

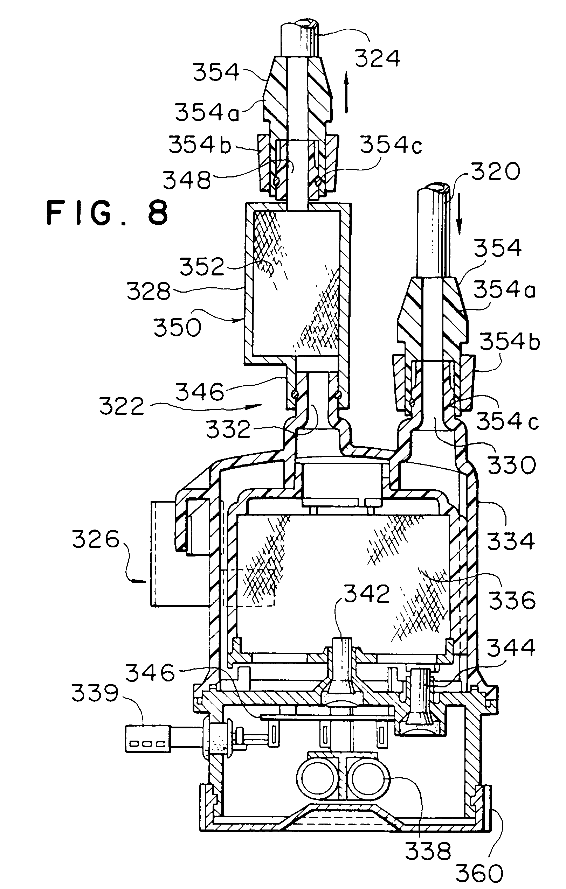

Next, a third embodiment of the present invention will be explained with reference to Fig. 8.

A water purifying apparatus comprises a water purifying apparatus main body 322, an active carbon fiber unit 326, and a hollow fiber membrane unit 328. The active carbon fiber unit 326 comprises a casing 334 having an inlet 330 and an outlet 332, an active carbon fiber filter 336 loaded into the casing 334, a dry battery cell 338 for applying a voltage to the active carbon fiber filter 336, a connector 339 to be connected to an external power supply, a circuit board 346, a positive electrode 342 and a negative electrode 344. Reference numeral 360 denotes a water-vapor proof cap. The hollow fiber membrane unit 328 comprises a casing 350 having an inlet 346 and an outlet 348, and a hollow fiber membrane filter 352 loaded into the casing 350.

A coupler 354 disposed on the top end of an intake pipe 320 is releasably connected to the inlet 330 of the active carbon fiber unit 326. The coupler 354 comprises a nozzle 354a, a spool 354b slidably mounted on the nozzle 354a, and a ring seal 354c provided inside the nozzle 354a. The nozzle 354a is fitted over the inlet 330, and the ring seal 354c is compressed radially by advancing the spool 354b. As a result, the coupler 354 is coupled to the inlet 330 in a watertight manner. If the spool 354b is retracted, the ring seal 354c expands and allows the nozzle 354a to be easily pulled off the inlet 330.

A second coupler 354 is disposed on the end of a discharge pipe 324. One end of the discharge pipe 324 is releasably coupled to the outlet 348 of the hollow fiber membrane unit 328 in a water tight manner by the coupler 354. The other end of the discharge pipe 324 is connected to a water faucet which is the same as the water faucet 8 of the first embodiment. The inlet 346 is fitted over the outlet 332.

The inlet 330, the outlet 332 and outlet 348 have the same outer diameter. The inner diameter of the nozzle 354a of the coupler 354 is equal to that of the inlet 346.

In the water purifying apparatus constructed as described above, water supplied from the intake pipe 320 contacts the active carbon fiber filter 336, and thus odorous components such as chlorine and the like are removed. Then, the water is subjected to a sophisticated filtering process by the hollow fiber filter 352. Thereafter, the water is discharged through the discharge pipe 324.

There are some areas of the world where a filtering process performed by using the hollow fiber membrane filter 352 is unnecessary.

The active carbon fiber filter 336 is sufficient because the quality of the water supply source is good. In such a case, the coupler 354 of the discharge pipe 324 is disconnected from the outlet 348 of the hollow fiber membrane unit 328, and the inlet 346 is pulled off the outlet 332 of the active carbon fiber unit 326. Next, the coupler 354 of the discharge pipe 324 is connected to the outlet 332. As a result, the water purifying apparatus has only the active carbon fiber filter 336 as a water purifying element. Thus, a selection would be made between a construction in which the hollow fiber membrane unit 328 and the active carbon fiber unit 326 are both used and a construction in which only the active carbon fiber unit 326 is used.

Although in the above-described embodiment the active carbon fiber filter 336 is used, ordinary active carbon may be used. In the above-described embodiment, a voltage is applied to the active carbon fiber filter. Its purpose is to suppress the proliferation of coliform bacilli or general bacilli by applying a low amount of voltage to the active carbon fiber.

Although in the above-described embodiment the active carbon (active carbon fibers) and hollow fiber membranes are used as water purifying elements, it is clear that any other water purifying elements may be used in the present invention as far as they are capable of removing chlorine or bacteria.

The above embodiments of the present invention can prevent the proliferation of microbes in feedwater which remains in a filter and a feedwater passage leading from the filter.

Many different embodiments of the present invention may be constructed.

It should be understood that the present invention is not limited to the specific embodiments described in this specification. To the contrary, the present invention is intended to cover various modifications and equivalent arrangements of the specific embodiments, within the scope of the claims.

## Claims

1. Water purifying apparatus, comprising:
a water purifying apparatus main body (7; 100; 322) for purifying water, said water purifying apparatus main body having an inlet (16; 330) arranged to receive water to be purified, filter means (24; 336, 352) in communication with said inlet, an outlet (17; 348) disposed downstream of said filter means, and first electrode means (31, 32; 342, 344) for passing electric current through water disposed in said filter means (24; 336);
a water faucet (8) for discharging water purified by said water purifying apparatus main body, said water faucet having a water faucet main body (49) disposed downstream of said outlet (17;348), a water passage (53) disposed downstream of said faucet main body, and second electrode means (58, 66) for passing electric current through water disposed in said water passage; and
power supply means (9, 10; 338) for supplying electric current to said first and second electrode means.

2. Water purifying apparatus according to claim 1, wherein said water passage (53) of said water faucet (8) comprises an electrically conductive discharge pipe (53) which acts as an electrode (58) of said second electrode means (58, 66).

3. Water purifying apparatus according to claim 1 or 2, wherein said water purifying apparatus main body (7) further comprises: a cap (11) provided with said inlet (16) and said outlet (17); a cartridge (20) fitted to said cap and containing said filter means (24); a casing (12) fitted to said cap and containing said cartridge; and a water current sensor (25) for detecting the flow of water through said filter means.

4. Water purifying apparatus according to claim 1 or 2, wherein said water faucet (8) further comprises a mechanical switch disposed inside said water faucet main body (49) and arranged to be operated by the flow of water through said water faucet main body.

5. Water purifying apparatus according to claim 1, 2 or 4, wherein said filter means (24) is housed inside a casing (12) having said inlet (16) and said outlet (17), and said water purifying apparatus further comprises a pair of couplers (16a, 17a) detachably connectable to said inlet and said outlet to permit replacement of said casing.

6. Water purifying apparatus according to claim 1, 2 or 4, wherein said filter means (336, 352) comprises an active carbon filter (336) and a hollow fiber membrane filter (352) disposed downstream of said active carbon filter.

7. Water purifying apparatus according to claim 6, wherein said water purifying apparatus main body (322) further comprises:
inlet and outlet couplers (354);
a first casing (334) containing said active carbon filter (336) and having said inlet (330), which is detachably connectable to said inlet coupler, and an outlet (332), said first casing also containing said first electrode means (342, 344); and
a second casing (350) containing said hollow fiber membrane filter (352) and having an inlet (346), which is detachably connectable to said outlet (332) of said first casing (334), and said main body outlet (348), which is detachably connectable to said outlet coupler (354).

## Patentansprüche

1. Wasserreinigungsvorrichtung, umfassend:
einen der Wasserreinigung dienenden Wasserreinigungsvorrichtungs-Hauptkörper (7; 100; 322) mit einem Einlaß (16; 330) zum Aufnehmen bzw. Einführen von zu reinigendem Wasser, einer in Verbindung mit dem Einlaß angeordneten Filtereinheit (24; 336; 352), einem stromab der Filtereinheit angeordneten Auslaß (17; 348) und einer ersten Elektrodeneinheit (31, 32; 342, 344) zum Leiten von elektrischem Strom durch das in der Filtereinheit (24; 336) befindliche Wasser;
einen zum Austragen bzw. Abgeben des mittels des Wasserreinigungsvorrichtung-Hauptkörpers gereinigten Wassers dienenden Wasserhahn (8) mit einem stromab des Auslasses (17; 348) angeordneten Wasserhahn-Hauptkörper (49), einem (einer) stromab des Wasserhahn-Hauptkörpers angeordneten Wasserdurchgang oder -leitung (53) und einer zweiten Elektrodeneinheit (58, 66) zum Leiten von elektrischem Strom durch das im Wasserdurchgang befindliche Wasser; sowie
eine Stromversorgungseinheit (9, 10; 338) zum Zuspeisen von elektrischem Strom zu den ersten und zweiten Elektrodeneinheiten.

2. Wasserreinigungsvorrichtung nach Anspruch 1, wobei der Wasserdurchgang (53) des Wasserhahns (8) ein elektrisch leitfähiges Austragrohr (53) aufweist, das als eine Elektrode (58) der zweiten Elektrodeneinheit (58, 66) dient.

3. Wasserreinigungsvorrichtung nach Anspruch 1 oder 2, wobei der Wasserreinigungsvorrichtung-Hauptkörper (7) ferner umfaßt: eine mit dem Einlaß (16) und dem Auslaß (17) versehene Kappe (11), eine an der Kappe angesetzte und die Filtereinheit (24) enthaltende Patrone (20), ein auf die Kappe aufgesetztes und die Patrone enthaltendes Gehäuse (12) sowie einen Wasserstromsensor (25) zum Detektieren der Strömung von Wasser durch die Filtereinheit.

4. Wasserreinigungsvorrichtung nach Anspruch 1 oder 2, wobei der Wasserhahn (8) ferner einen innerhalb des Wasserhahn-Hauptkörpers (49) angeordneten mechanischen Schalter, der für Betätigung durch die Strömung des Wassers durch den Wasserhahn-Hauptkörper angeordnet ist, umfaßt.

5. Wasserreinigungsvorrichtung nach Anspruch 1, 2 oder 4, wobei die Filtereinheit (24) innerhalb eines Gehäuses (12) mit dem Einlaß (16) und dem Auslaß (17) angeordnet ist und die Wasserreinigungsvorrichtung weiterhin zwei Kupplungen (16a, 17a) aufweist, die zur Ermöglichung eines Auswechselns des Gehäuses trennbar mit Einlaß und Auslaß verbindbar sind.

6. Wasserreinigungsvorrichtung nach Anspruch 1, 2 oder 4, wobei die Filtereinheit (336, 352) ein Aktivkohlefilter (336) und ein stromab des letzteren angeordnetes bzw. diesem nachgeschaltetes Hohlfasermembranfilter (352) umfaßt.

7. Wasserreinigungsvorrichtung nach Anspruch 6, wobei der Wasserreinigungsvorrichtung-Hauptkörper (322) ferner umfaßt:
Einlaß- und Auslaßkupplungen (354),
ein das Aktivkohlefilter (336) enthaltendes erstes Gehäuse (334) mit dem Einlaß (330), der trennbar mit der Einlaßkupplung verbindbar ist, und einem Auslaß (332), wobei das erste Gehäuse auch die erste Elektrodeneinheit (342, 344) enthält, und
ein das Hohlfasermembranfilter (352) enthaltendes zweites Gehäuse (350) mit einem Einlaß (346), der trennbar mit dem Auslaß (332) des ersten Gehäuses (334) verbindbar ist, und dem Hauptkörperauslaß (348), der trennbar mit der Auslaßkupplung (354) verbindbar ist.

## Revendications

1. Appareil d'épuration de l'eau, comprenant:
un corps principal (7;100;322) d'appareil d'épuration d'eau pour épurer l'eau, ledit corps principal d'appareil d'épuration d'eau comportant une entrée (15;330) agencée de manière à recevoir l'eau à épurer, un moyen filtrant (24;336,352) en communication avec ladite entrée, une sortie (17;348) disposée en aval dudit moyen filtrant, et un premier système d'électrodes (31,32;342,344) pour faire passer un courant électrique à travers l'eau, disposé dans ledit moyen filtrant (24;336);
un robinet d'eau (8) pour débiter l'eau épurée par ledit corps principal d'appareil d'épuration d'eau, ledit robinet d'eau comportant un corps principal (49) de robinet d'eau disposé en aval de ladite sortie 117;348), un passage d'eau (53) disposé en aval dudit corps principal de robinet, et un second système d'électrodes (58,66) pour faire passer un courant électrique à travers l'eau, disposé dans ledit passage d'eau; et
un moyen d'alimentation électrique (9,10;338) pour alimenter en courant électrique lesdits premier et second systèmes d'électrodes.

2. Appareil d'épuration d'eau selon la revendication 1, dans lequel ledit passage d'eau (53) dudit robinet d'eau (8) comprend un tube d'écoulement (53) conducteur d'électricité qui sert d'électrode (58) dudit second système d'électrodes (58,66).

3. Appareil d'épuration d'eau selon la revendication 1 ou 2, dans lequel ledit corps principal (7) d'appareil d'épuration d'eau comprend en outre: un couvercle (11) muni de ladite entrée (16) et de ladite sortie (17); une cartouche (20) adaptée audit couvercle et contenant ledit moyen filtrant (24); un boîtier (12) adapté audit couvercle et contenant ladite cartouche; et un détecteur (25) de courant d'eau pour détecter le débit d'eau à travers ledit moyen filtrant.

4. Appareil d'épuration d'eau selon la revendication 1 ou 2, dans lequel ledit robinet d'eau (8) comprend en outre un commutateur mécanique disposé à l'intérieur dudit corps principal (49) de robinet d'eau et agencé de manière à être actionné par le débit d'eau à travers ledit corps principal de robinet d'eau.

5. Appareil d'épuration d'eau selon l'une quelconque des revendications 1, 2 et 4, dans lequel ledit moyen filtrant (24) est logé dans un boîtier (12) qui comporte ladite entrée (16) et ladite sortie (17), et ledit appareil d'épuration d'eau comprend en outre une paire d'éléments d'accouplement (16a,17a) qui peuvent être fixés de façon détachable à ladite entrée et à ladite sortie pour permettre le remplacement dudit boîtier.

6. Appareil d'épuration d'eau selon l'une quelconque des revendications 1, 2 et 4, dans lequel ledit moyen filtrant (336,352) comprend un filtre à charbon actif (336) et un filtre creux à membrane fibreuse (352) disposé en aval dudit filtre à charbon actif.

7. Appareil d'épuration d'eau selon la revendication 6, dans lequel ledit corps principal (322) d'appareil d'épuration d'eau comprend en outre:
des éléments d'accouplement (354) d'entrée et de sortie;
un premier boîtier (334) contenant ledit filtre à charbon actif (336) et comportant ladite entrée (330) qui peut être fixée de façon détachable audit élément d'accouplement d'entrée, ainsi qu'une sortie (332), ledit premier boîtier contenant également ledit premier système d'électrodes (342,344); et
un second boîtier (350) contenant ledit filtre creux à membrane fibreuse (352) et comportant une entrée (346) qui peut être fixée de façon détachable à ladite sortie (332) dudit premier boîtier (334), ainsi que ladite sortie (348) de corps principal qui peut être fixée de façon détachable audit élément d'accouplement de sortie (354).
